# EUROPÄISCHE PATENTSCHRIFT

(11) **EP 2 873 874 B1**
(45) Veröffentlichungstag und Bekanntmachung des Hinweises auf die Patenterteilung: **26.06.2019**
(21) Anmeldenummer: 14401089.9
(22) Anmeldetag: 26.08.2014
(51) Int. Cl.: F16B 5/06

(54) **Anordnung zur Befestigung eines Ausstattungsteiles eines Kraftfahrzeuges**
Arrangement for the attachment of an equipment component of a motor vehicle
Agencement pour la fixation d'un équipement d'intérieur d'un véhicule automobile

(30) Priorität: 14.11.2013 DE 202013105134 U
(43) Veröffentlichungstag der Anmeldung: 20.05.2015
(73) Patentinhaber: KDK Automotive GmbH, 63607 Wächtersbach (DE)
(72) Erfinder: Middel, Dietmar, 57462 Olpe (DE)
(74) Vertreter: Köchling, Conrad-Joachim

(56) Entgegenhaltungen:
- CH-A- 508 170
- JP-U- H04 117 907
- US-B1- 6 290 081

## Beschreibung

Die Erfindung betrifft eine Anordnung zur Befestigung eines Ausstattungsteiles des Innenraumes eines Kraftfahrzeuges an Bestandteilen der Karosserie, bestehend aus einem karosserieseitig befestigbaren oder befestigten Träger und einem mit dem Träger lösbar verbundenen Stützteil als Bestandteil des Ausstattungsteiles.

Eine solche Anordnung ist im Stand der Technik bekannt. Der karosserieseitig befestigbare oder befestigte Träger wird herkömmlich an Bestandteilen der Karosserie befestigt. Beispielsweise wird dazu der Träger am Rohbau der Karosserie angeschweißt oder in sonstiger geeigneter Art und Weise mit der Karosseriestruktur verbunden. Mit diesem Träger ist ein Stützteil als Bestandteil des Ausstattungsteiles lösbar verbunden. Hierzu erfolgt herkömmlich die Befestigung über Verschraubung der Teile miteinander, wobei am Träger in geeigneter Weise entsprechende Gewindeteile, beispielsweise Schnappmuttern oder Schweißmuttern befestigt werden müssen. Nachdem dann das Stützteil lagerichtig auf den Träger aufgesetzt ist, können die entsprechenden Schrauben eingebracht und die Teile miteinander durch die Schrauben verbunden werden. Eine solche Anordnung wird insofern als nachteilig angesehen, als zusätzliche Befestigungsmittel zur Verbindung der Teile miteinander vorgesehen und angeordnet werden müssen. Darüber hinaus müssen solche Befestigungsmittel, die nicht verloren gehen dürfen, durch geeignete Handhabe des Monteurs betätigt werden, um die Teile mittels Schrauben miteinander zu verbinden. Der gesamte Herstellungsaufwand zur Komplettierung dieser Anordnung ist sowohl hinsichtlich der erforderlichen Befestigungselemente als auch bezüglich des Montageaufwandes verbesserungsbedürftig.

Aus der CH 508 170 A ist eine Langfeldleuchte mit einer Verschlussanordnung zum dichten Verbinden des Gehäuses mit einer Schutzwanne bekannt, die im Leuchtengehäuse eine Verschlussstange aufweist, die Schrägschlitze besitzt, in welche Führungsbolzen des Leuchtengehäuses eingreifen, wobei ein von außen betätigbarer Exzenterbolzen so mit der Verschlussstange zusammenwirkt, dass diese entlang der Schrägschlitze die Längsrichtung hin- und her bewegbar ist.

Aus der JP H 04 117 907 U ist eine Verbindung von zwei Teilen mittels einer Befestigungsklammer bekannt, die in der Solllage rastend in einer Ausnehmung eingreift.

Ausgehend von diesem Stand der Technik liegt der Erfindung die Aufgabe zugrunde, eine Anordnung gattungsgemäßer Art zu schaffen, bei der in einfacher Weise eine Fixierung des Stützteiles am Träger erfolgen kann, ohne dass es zusätzlicher Schraubbefestigungsmittel bedarf und ohne dass ein zeitaufwendiger Montageaufwand betrieben werden muss.

Zur Lösung dieser Aufgabe schlägt die Erfindung vor, dass der Träger eine Stützfläche oder Stützflächenteile aufweist, an der oder an denen das Stützteil mit einer Haltefläche oder Halteflächenteilen anliegt,
dass von der Stützfläche oder von Stützflächenteilen des Trägers mindestens ein Haken abragt, der eine passende Ausnehmung der Haltefläche oder der Halteflächenteile des Stützteiles durchgreift und auf der dem Träger abgewandten Seite über die Haltefläche oder die Halteflächenteile vorragt,
dass am Stützteil mindestens ein Riegel parallel zu dessen Haltefläche oder Halteflächenteil verschieblich gehalten ist, der in einer Vormontagelage einen Durchlassbereich für den Haken bildet und in der Montagesollstellung vom Haken übergriffen ist, dass am Träger randnah jeweils parallel zu einem Haken oder mehreren Haken eine Verstelllasche ausgebildet ist, die Abstand von dem Haken aufweist oder vor oder zwischen zwei Haken angeordnet ist und gleichgerichtet zu den Haken von der Stützfläche des Trägers abragt, dass das Stützteil in seiner Haltefläche jeweils eine Ausnehmung als Durchgriff für eine Verstelllasche aufweist, und in einer an die Haltefläche anschließenden Seitenwandung des Stützteiles einen zur Verstelllasche offenen Wandungsdurchbruch aufweist, dass ein Montagehebel vorgesehen ist, der in Montagelage mit einem Endbereich in einer Verstelllasche drehbar um eine Drehachse drehbar gelagert ist und mit mindestens einer Verstellnase in eine Verstellkontur eines Riegels eingreift, wobei der Montagehebel sich von dem Endbereich, der die Verstellnase aufweist, als schlanker Hebel bis zu einem zweiten Endbereich als Handhabe erstreckt und neben der Seitenwandung des Stützteiles gegebenenfalls an der Seitenwandung geführt angeordnet ist.

Gemäß dieser Ausgestaltung weist der Träger eine Stützfläche oder Stützflächenteile auf, an der oder an denen das Stützteil mit einer Haltefläche oder Halteflächenteilen anliegt. Wie herkömmlich wird der Träger in geeigneter Weise an der Karosseriestruktur befestigt. Anschließend kann dann das Stützteil auf den Träger aufgesetzt oder aufgesteckt werden, wobei die von der Stützfläche oder den Stützflächenteilen des Trägers abragenden Haken in passende Ausnehmungen der Haltefläche oder der Halteflächenteile des Stützteiles eingesetzt werden können, sodass diese Ausnehmungen von den Haken durchgriffen sind. Sie greifen auf der dem Träger abgewandten Seite über die Haltefläche oder Halteflächenteile des Stützteiles, sodass dieses mittels der Haken arretiert werden kann. Um einen dauerhaften sicheren Sitz der Teile aneinander zu gewährleisten, ist am Stützteil mindestens ein Riegel vorgesehen, der parallel zu der Haltefläche oder den Halteflächenteilen des Stützteiles verschieblich gehalten ist. Dieser Riegel ist derart ausgebildet, dass er in der Vormontagelage einen Durchlassbereich für die Haken bildet, sodass das Stützteil einfach auf den Träger samt Haken aufgesteckt werden kann. In der Montagesolllage wird der Riegel entlang der Haltefläche oder Halteflächenteile verschoben, sodass der Haken in einem Bereich, der sich neben dem Durchlassbereich befindet, über den Riegel greift und somit die Teile durch den Riegel miteinander dauerhaft verbunden sind. Die Montage ist äußerst einfach durchzuführen, indem das Stützteil lagerichtig auf den Träger aufgesteckt wird und anschließend der oder die Riegel in die Montagesolllage verschoben werden, sodass ein fester Verbund der Teile erreicht ist. Zusätzliche Befestigungsmittel wie Schrauben oder dergleichen werden hierbei nicht benötigt. Ebenso ist eine Betätigung von Schrauben oder dergleichen durch den Montierenden nicht erforderlich. Sowohl die Herstellung, als auch die Montage ist äußerst kostengünstig und zeitsparend durchzuführen. Zudem ist die Montage vereinfacht und erleichtert. Zudem ist gemäß dieser Ausgestaltung ist ein Montagehebel vorgesehen, der mit einem Endbereich in der Verstelllasche um eine Drehachse drehbar gelagert ist und der mit seiner Verstellnase in eine Verstellkontur des Riegels eingreift. Zur Montage werden die Teile zueinander vorpositioniert, wobei der Riegel dann in der Vormontagelage befindlich ist. Anschließend kann der Montagehebel eingesetzt werden und mit die Drehachse bildenden Teilen in der Verstelllasche drehbar gelagert werden. Hierbei greift dann die Verstellnase des Hebels in die Verstellkontur des Riegels ein, sodass durch Drehung des Hebels um die Drehachse eine Zwangsverschiebung des Riegels in die Endmontagelage erfolgt. Sofern der Riegel über einen größeren Weg zur Verriegelung verschoben werden muss, kann der Hebel zunächst mit der Verstellnase in eine erste Verstellkontur des Riegels eingreifen, wobei dann durch Bewegung des Hebels ein teilweiser Schub des Riegels in die Montagesolllage erfolgt. Anschließend wird der Montagehebel nochmals mit der Verstellnase in eine weitere Verstellkontur des Riegels eingesetzt und der Hebel erneut um die Drehachse gedreht, bis die Montageendlage erreicht ist. Der Hebel kann dann entfernt werden, da er nach der Montage nicht mehr erforderlich ist. Die Hebelgestaltung ist vorzugsweise derart getroffen, dass der Hebel in einem Bereich zwischen Einbauteilen und dem Stützteil zugeführt werden kann und in die Verstellkontur des Riegels eingreifend angeordnet werden kann, wobei er den fensterartigen Wandungsdurchbruch mit mindestens der Verstellnase durchgreift.

Bei dieser Anordnung ist der Hebel bei seiner durch den montierenden durchgeführten Bewegung an der Außenseite der Seitenwandung des Stützteiles geführt.

Je nach Montagenotwendigkeit kann die Verstelllasche am vorderen oder hinteren Endbereich oder dazwischen z.B. mittig des Trägers vorgesehen sein. Auch können die Haken und die Verstelllasche zueinander fluchtend oder in Querrichtung bezogen auf die Fahrtrichtung des Fahrzeuges zueinander versetzt angeordnet sein. Auch kann die Verstelllasche gegenüber den Haken nach oben vorragen oder hinter diesen zurückliegen. Der Montagehebel kann auch im Riegel teilweise oder vollständig geführt sein.

Vorzugsweise ist dabei vorgesehen, dass an zwei zueinander parallelen Randbereichen der Stützfläche oder der Stützflächenbereiche des Trägers jeweils mit Abstand voneinander zwei Haken abragen, das Stützteil entsprechend an zwei zueinander parallelen Randbereichen der Haltefläche oder der Halteflächenteile des Stützteiles Ausnehmungen aufweist, die von den Haken durchgriffen sind, und dass zwei Riegel angeordnet sind, die jeweils entlang der Randbereiche der Haltefläche oder Halteflächenteile des Stützteiles längs des Randbereiches verschieblich gehalten sind.

Gemäß dieser Ausgestaltung ist an zwei zueinander parallelen Randbereichen der Stützfläche oder der Stützflächenbereiche des Trägers jeweils die Anordnung von Haken vorgesehen. Diese zueinander parallelen Randbereiche erstrecken sich vorzugsweise parallel zur Fahrtrichtung des damit ausgestatteten Fahrzeuges. Des Weiteren erstrecken sich diese Bereiche parallel zur Schieberichtung des verschieblichen Riegels. Die Riegel, die zur Arretierung der Bauteile dienen, sind jeweils entlang der Randbereiche an der Haltefläche oder Halteflächenteilen des Stützteiles so gehalten, dass sie längs des Randbereiches verschieblich sind, quer zur Erstreckung des Randbereiches aber unverschieblich geführt sind.

Besonders bevorzugt ist vorgesehen, dass der Träger eine rechteckige Stützfläche aufweist, deren zueinander parallele Längsrandkanten die Haken aufweisen, wobei die Haken vom Träger zum Stützteil hin vorragen und an den freien Enden der an gegenüberliegenden Längsrandkanten ausgebildeten Haken zueinander hin gerichtete Hakennasen ausgebildet sind.

Diese Ausgestaltung führt zu einer dauerhaften und festen Verbindung der Teile in der Montagesolllage.

Auch ist bevorzugt vorgesehen, dass das Stützteil etwa u-förmig ausgebildet ist und mit seiner Basis als Haltefläche an der Stützfläche des Trägers anliegt, wobei die Schenkel des Stützteiles von der Basis entgegen der Stützfläche des Trägers abragen und wobei in der Basis des Stützteiles die Ausnehmungen in unmittelbarer Nähe der Schenkel ausgebildet sind und an die Ausnehmungen anschließende Freiräume für die Haken in den Schenkeln des Stützteiles ausgebildet sind, in welche die Haken des Trägers, eingreifen.

Gemäß dieser Ausgestaltung ist das Stützteil etwa u-förmig ausgebildet. An den freien Enden den Schenkel können entsprechende Ausstattungsteile, beispielsweise eine schwenkbare Armlehne oder dergleichen befestigt werden. Diese Schenkel des Stützteiles ragen von der Basis des Stützteiles entgegen der Stützfläche des Trägers ab, sodass nach der Endmontage der Teile die Schenkel beispielsweise nach oben in den Innenraum des entsprechenden Fahrzeuges abragen. In der Basis des Stützteiles sind nahe der Schenkel und übergehend in die Schenkel Ausnehmungen zum Durchgriff der Haken und anschließende Freiräume für die Hakenschäfte ausgebildet. In diese greifen die Haken des Trägers in Montagesolllage der Teile ein und können durch den jeweils eingeschobenen Riegel fixiert werden. Durch diese Ausgestaltung wird erreicht, dass der Riegel mit seiner Seitenfläche unmittelbar an der Innenfläche der Schenkel jeweils anliegt, wobei der Haken jeweils die Ausnehmungen durchgreifend in die Freiräume eingesetzt ist, sodass das Material des Hakens, insbesondere der Hakenschaft nicht aufträgt. Der Riegel kann also flächig an der Innenseite des Schenkels anliegen, ohne dass durch den dazwischen befindlichen Haken ein Abstand erzeugt wird.

Zusätzlich ist vorgesehen, dass das Stützteil an seiner Haltefläche Führungs- und/oder Stützstege aufweist sowie eine seitliche Begrenzungswand, wobei der Riegel zwischen den Stegen und der Begrenzungswand längsverschieblich geführt und gehalten ist.

Hierbei weist das Stützteil zusätzliche Führungs- oder Stützstege auf, die von der Haltefläche quasi nach oben, gleichgerichtet zu den Schenkeln, abragen, wobei die Schenkel die seitliche Begrenzungswand bilden. Der entsprechende Riegel kann zwischen diesen Stegen und der Begrenzungswand eingeführt werden und ist zwischen diesen Teilen längsverschieblich geführt aber quer unverschieblich gehalten.

Um die endgültige Montageposition zu sichern, kann vorgesehen sein, dass am Riegel eine federnde Raste ausgebildet ist, die in Solllage, an einer Ausnehmung in der Haltefläche des Stützteiles eingerastet ist.

Zudem ist bevorzugt vorgesehen, dass der Durchlassbereich des Riegels durch eine Ausnehmung in einer Seitenfläche des Riegels gebildet ist, die dem Hakenschaft des Hakens zugewandt ist, wobei die Ausnehmung durch zwei Seitenwandteile und ein Basisteil einer Nut im Riegel gebildet ist.

Gemäß dieser Ausgestaltung ist der Riegel zwar als durchgehendes stabförmiges Element ausgebildet, jedoch ist jeweils der Durchlassbereich durch eine Ausnehmung in der Seitenfläche des Riegels gebildet. Der Riegel ist also in diesem Teilbereich schmaler ausgebildet, als im übrigen Haltebereich. In dieser Ausnehmung kann der Haken beim Zusammenstecken der Teile eingreifen und durch diesen Bereich geführt werden. Die Ausnehmung ist durch zwei Seitenwandungen und ein Basisteil einer Nut im Riegel begrenzt.

Um eine Zuführhilfe zu bilden, ist vorgesehen, dass mindestens eine Seitenwand der Nut des Riegels eine Einführhilfe für den Haken bildend geschrägt ist.

Hierdurch wird erreicht, dass die Teile beim Zusammenstecken mittels dieser Einführhilfe einfach und genau positioniert werden können.

Wie schon oben ausgeführt, ist bevorzugt vorgesehen, dass die Verstellkontur des Riegels mehrere Eingriffsbereiche für die Verstellnase des Montagehebels aufweist, die in Längsrichtung bzw. Schubrichtung des Riegels einander benachbart sind.

Des Weiteren ist bevorzugt vorgesehen, dass der Träger an zwei parallele Seitenlängsrandkanten anschließende, vom Stützteil weg gerichtete Wandungsteile aufweist.

Diese vom Stützteil weg gerichteten Wandungsteile des Trägers, die in Montagesolllage quasi nach unten abragen, dienen zur Befestigung des Trägers an der Karosseriestruktur.

Vorzugsweise ist dabei vorgesehen, dass die Haken mit ihrem Fußteil an ein Wandungsteil anschließen.

Durch diese Anordnung wird eine relativ unelastische Anformung der Haken an dem Wandungsteil des Trägers erreicht, sodass eine positionsgenaue Fixierung erreicht wird.

Unter Umständen kann aber bevorzugt sein, dass die Haken mit ihrem Fußteil in die Stützfläche des Trägers übergehen, wobei der Übergangsbereich durch den Hakenfuß seitlich umgebende Trennschlitze in der Stützfläche des Trägers gebildet sind.

Hierdurch wird erreicht, dass die Haken in Querrichtung etwas federn können, um gegebenenfalls Fertigungs- und Montagetoleranzen auszugleichen.

Ebenfalls zum Toleranzausgleich kann es vorteilhaft sein, wenn die Haken Hakennasen aufweisen, die über einen Teil ihrer Breite freigeschnitten sind, sodass federnde Hakennasenteile gebildet sind.

Hierbei kann bevorzugt vorgesehen sein, dass der Freischnitt zwischen den seitlichen Enden der Hakennase des Hakens ausgebildet ist.

Auch kann vorgesehen sein, dass der Freischnitt zu einem seitlichen Ende der Hakennase des Hakens offen ausmündet.

In jedem Fall ist bevorzugt vorgesehen, dass der durch den Freischnitt gebildete Steg des Hakens zum Hakenfuß hin vorragend von der Hakennase abgebogen oder weggerichtet ist.

Durch eine solche Ausgestaltung wird eine toleranzenausgleichende Fixierung des Riegels mittels der Haken ermöglicht.

Eine Weiterbildung wird darin gesehen, dass die Stützfläche des Trägers mehrere aus der Fläche zum Stützteil hin vorragende federnde Materialbereiche oder Buckel aufweist.

Durch die entsprechenden federnden Materialbereich oder Buckel wird eine federnde Abstützung zwischen Träger und Stützteil erreicht, um Toleranzen auszugleichen und einer Geräuschbildung entgegenzuwirken.

Bevorzugt ist zudem vorgesehen, dass der Träger ein Blechformteil ist, bei dem die Haken, die Verstelllasche sowie die Stützflächen oder Stützflächenteile und abgewinkelte Randteile einstückig an einen flachen Blechzuschnitt angeformt, freigeschnitten und/oder abgebogen sind.

Auch kann bevorzugt vorgesehen sein, dass das Stützteil ein Formteil aus spritzgießfähigem Material, insbesondere Kunststoff und/oder Metall ist.

Ausführungsbeispiele der Erfindung sind in der Zeichnung dargestellt und im Folgenden näher beschrieben.

Es zeigt:
- Figur 1: eine erfindungsgemäße Anordnung in isometrischer Ansicht im Zusammenbau gesehen;
- Figur 2: desgleichen in Seitenansicht;
- Figur 3: die Teile in einer Vormontageposition;
- Figur 4: desgleichen in einer Endmontageposition;

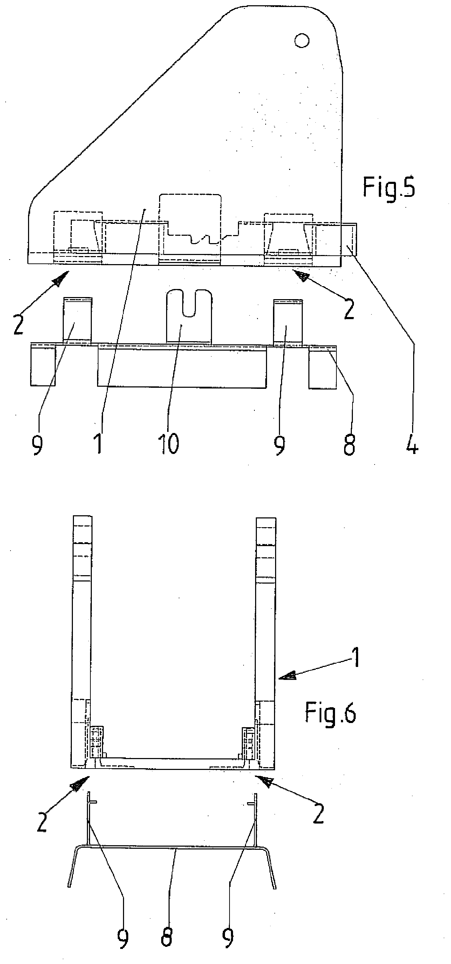

- Figur 5+6: die Vormontageposition in unterschiedlichen Blickrichtungen;
- Figur 7: die Zusammenbaulage in Seitenansicht;
- Figur 8: den Zusammenbau in einer Vorpositionierung des Riegels;
- Figur 9: desgleichen in der Endposition des Riegels jeweils im Schnitt gesehen;
- Figur 10: einen Ausschnitt der Vorrichtung in einer Vormontageposition;
- Figur 11: desgleichen in einer Zwischenmontageposition;
- Figur 12: desgleichen in einer Zwischenmontageposition;
- Figur 13: desgleichen in einer Endmontageposition;
- Figur 14: eine ausschnittsweise Darstellung in einer Endmontageposition;
- Figur 15: einen Montagehebel in Ansicht;
- Figur 16+17: Einzelheiten des Hebels in unterschiedlichen Ansichten;
- Figur 18: einen Riegel in Ansicht;
- Figur 19: desgleichen von der anderen Seite gesehen;

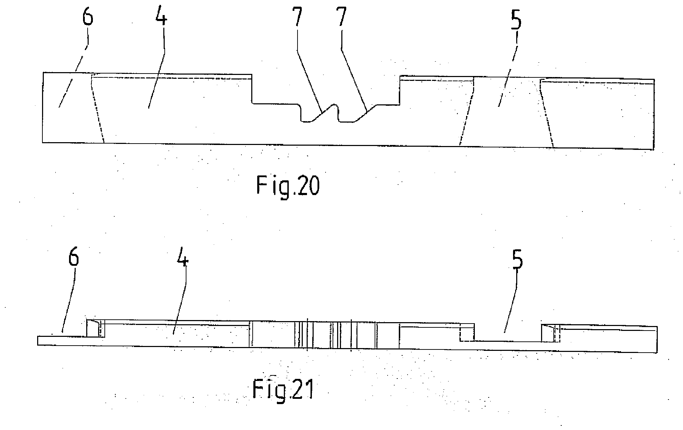

- Figur 20: den Riegel in Seitenansicht;
- Figur 21: den Riegel in Draufsicht gesehen;
- Figur 22: einen Träger in Ansicht gesehen;
- Figur 23: eine Variante in gleicher Ansicht;
- Figur 24: einen Ausschnitt der Figur 22 in vergrößertem Maßstab;
- Figur 25: eine Variante in Ansicht gesehen;
- Figur 26: eine weitere Variante in Ansicht;
- Figur 27: einen Träger in Ansicht;
- Figur 28: eine Ausschnittvergrößerung der Figur 27 mit größerem Maßstab;
- Figur 29: eine Stirnansicht.

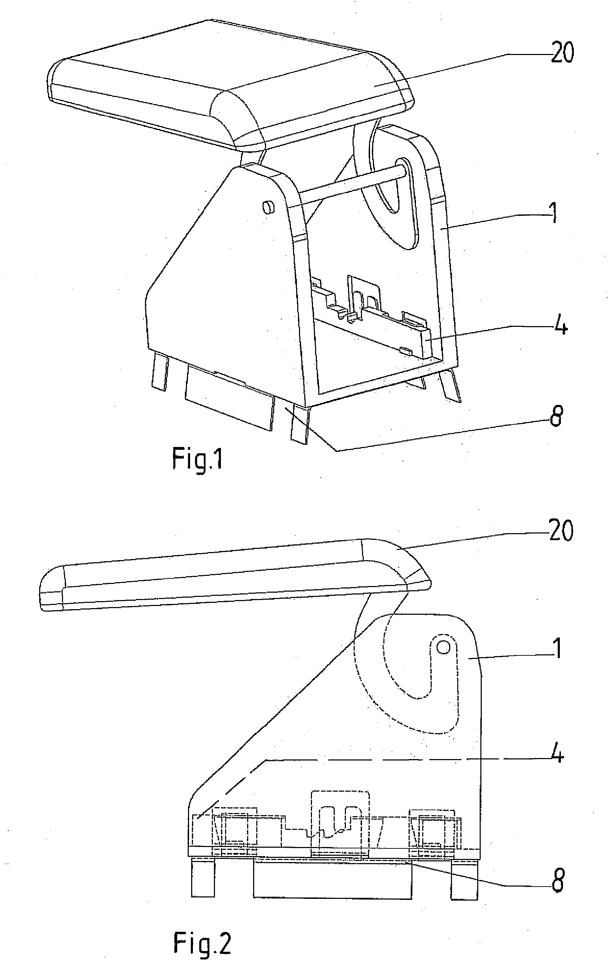

In den Zeichnungen ist eine Anordnung zur Befestigung eines Ausstattungsteiles des Innenraums eines Kraftfahrzeuges an Bestandteilen der Karosserie gezeigt. Die Anordnung besteht aus einem karosserieseitig befestigbaren oder befestigten Träger 8 und einem mit dem Träger 8 lösbar verbundenen Stützteil 1 als Bestandteil des Ausstattungsteiles. An dem Stützteil 1 ist, wie beispielsweise in Figur 1 und 2 gezeigt ist, eine Armlehne 20 beweglich befestigt. Eine solche Anordnung kann beispielsweise zwischen den Vordersitzen eines Fahrzeuges im Bereich eines Mitteltunnels angeordnet sein, wobei dann der Träger 8 an der Karosseriestruktur in geeigneter Weise befestigt wird, beispielsweise durch Verschweißung.

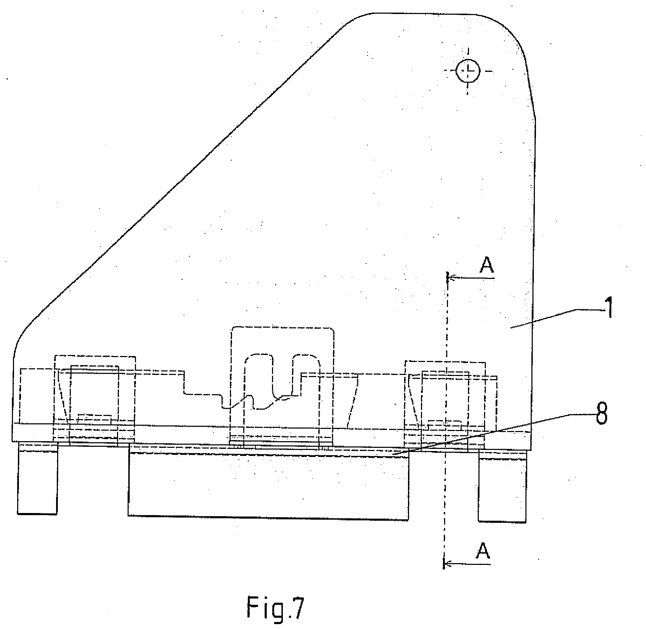

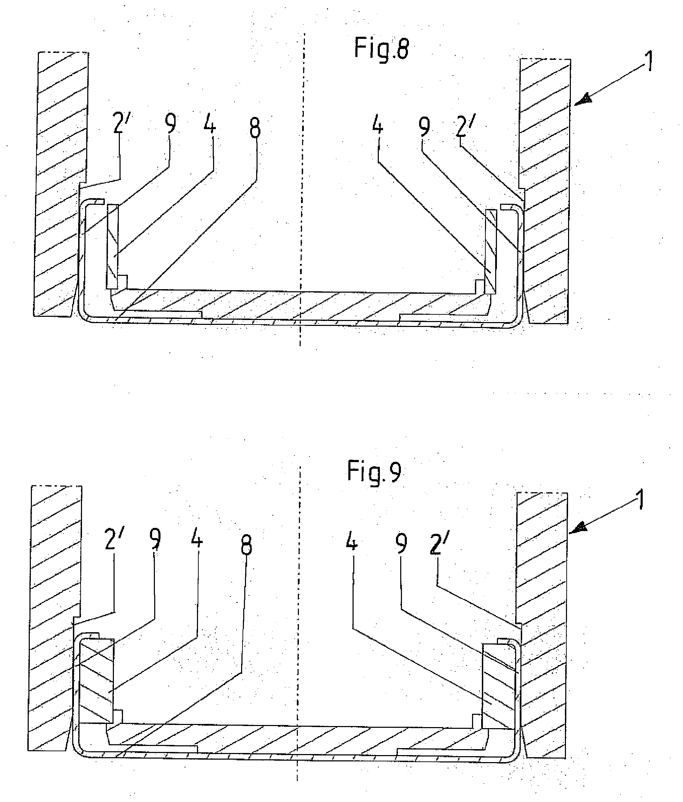

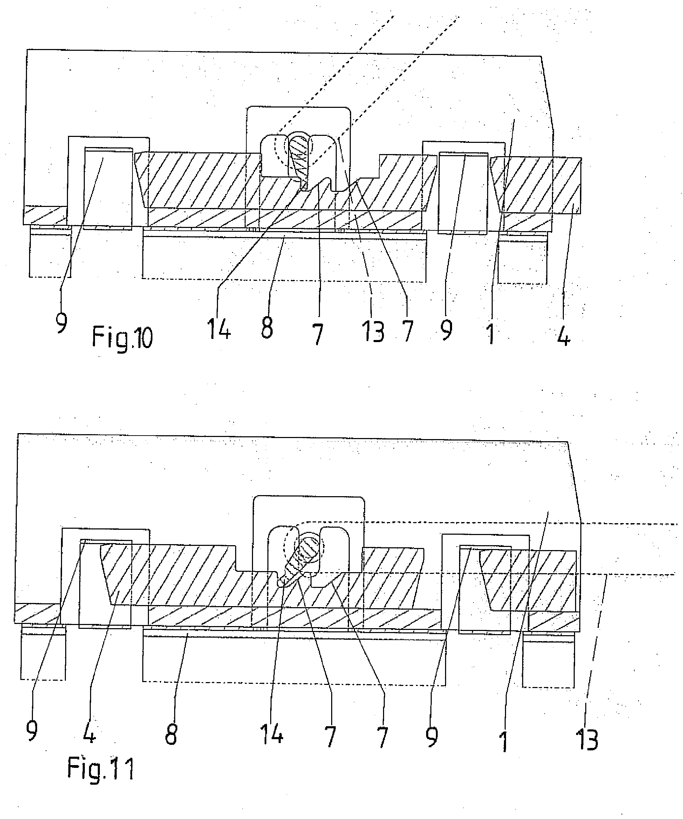

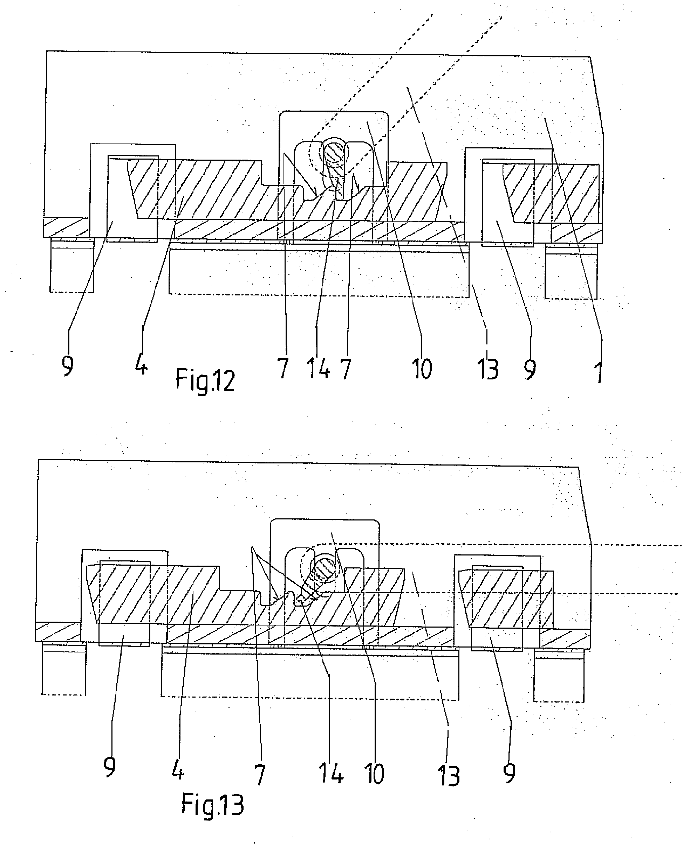

Der Träger 8 weist Stützflächen oder Stützflächenteile auf, an der oder an denen das Stützteil 1 mit einer Haltefläche oder Halteflächenteilen in Montagesolllage anliegt. Von der Stützfläche oder den Stützflächen des Trägers 8 ragen im Ausführungsbeispiel vier Haken 9 in Gebrauchslage nach oben ab. Diese Haken 9 durchgreifen in der Montagesollposition eine passende Ausnehmung 2 der Haltefläche oder der Halteflächenteile des Stützteiles 1. Die Haken 9 ragen in der Gebrauchslage nach oben auf der dem Träger 8 abgewandten Seite über die Haltefläche oder die Halteflächenteile des Stützteiles 1 vor, wie beispielsweise in Figur 1, 2, 4, 7, 8, 9, 10, 11, 12, 13, 14 verdeutlicht ist. Am Stützteil 1 sind im Ausführungsbeispiel zwei Riegel 4 parallel zu dessen Haltefläche oder Halteflächenteilen verschieblich gehalten, sodass sie beispielsweise aus der Position gemäß Figur 10 über die Position gemäß Figur 11 in die Position gemäß Figur 13 verschiebbar sind, also in der Zeichnung von rechts nach links.

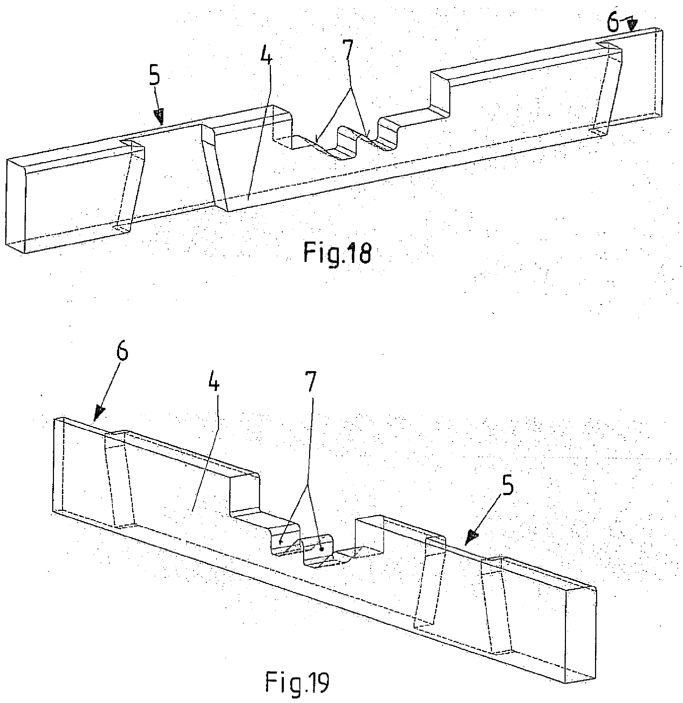

Die Riegel 4 weisen Durchlassbereiche 5,6 auf, wie beispielsweise in Figur 18 und 19 gezeigt ist, die zum Durchgriff der Haken 9 vorgesehen sind. In der Vormontagelage können die Haken 9 durch diesen Durchlassbereich 5,6 hindurchgesteckt werden. Anschließend wird der Riegel 4 in die Montagesollage verschoben, wobei dann der Riegel von den abgewinkelten Enden der Haken 9 übergriffen ist und die Einzelteile miteinander verbunden sind.

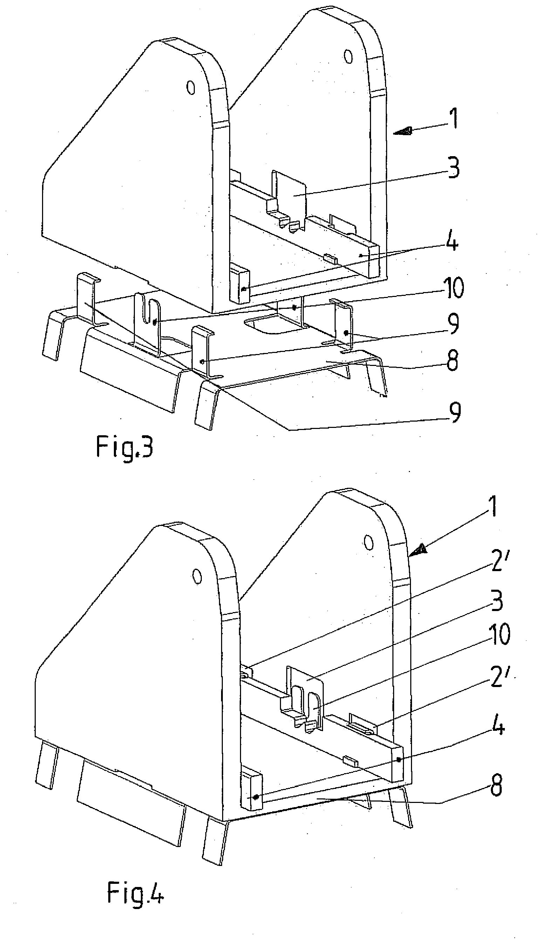

Wie beispielsweise in Figur 3 und 4 ersichtlich, sind an zwei aneinander parallelen Randbereichen der Stützfläche des Trägers 8 jeweils mit Abstand voneinander zwei Haken 9 ausgebildet. Das Stützteil 1 weist entsprechend an zwei zueinander parallelen Randbereichen von dessen Haltefläche Ausnehmungen 2 auf, die von den Haken in der Montageposition durchgriffen sind. Die beiden Riegel 4 sind jeweils entlang der Randbereiche der Haltefläche des Stützteiles 1 längs des Randbereiches verschieblich gehalten. Durch entsprechende Bemessung der Größe der Ausnehmungen 2 ist bei der Montage ein Toleranzausgleich mindesten im Bereich von einigen Millimetern ermöglicht, wobei die Ausnehmungen 2 in Längsrichtung des Stützteiles entsprechend größer ausgebildet sind, also in Fahrtrichtung des damit ausgestatteten Fahrzeugs.

Der Träger 8 weist eine im Wesentlichen rechteckige Stützfläche auf, deren zueinander parallele Längsrandkanten die Haken 9 aufweisen, wobei die Haken 9 vom Träger 8 nach oben zum Stützteil 1 hin vorragen. Die Haken 9 weisen an den freien Enden an den gegenüberliegenden Längsrandkanten zueinander hin gerichtete Hakennasen auf, wie beispielsweise gut in Figur 3 ersichtlich ist. Das Stützteil 1 weist eine etwa u-förmige Form auf und ist mit seiner Basis als Haltefläche an der Stützfläche des Trägers 8 anliegend angeordnet (in Montagesolllage), wobei die Schenkel des Stützteiles 1 von der Basis entgegen der Stützfläche des Trägers 8 abragen. In der Basis des Stützteiles 1 sind die Ausnehmungen 2 in unmittelbarer Nähe der Schenkel ausgebildet, wobei an die Ausnehmungen 2 Freiräume 2' für die Haken 9 anschließen. In der Sollposition können die Haken somit durch die Ausnehmungen 2 in die Freiräume 2' hineinragen und tragen gegenüber der Innenwandung der Schenkel des Stützteiles 1 nicht auf, sodass der Riegel 4 flächig an der entsprechenden Parallelfläche der Schenkel des Stützteiles 1 anliegt.

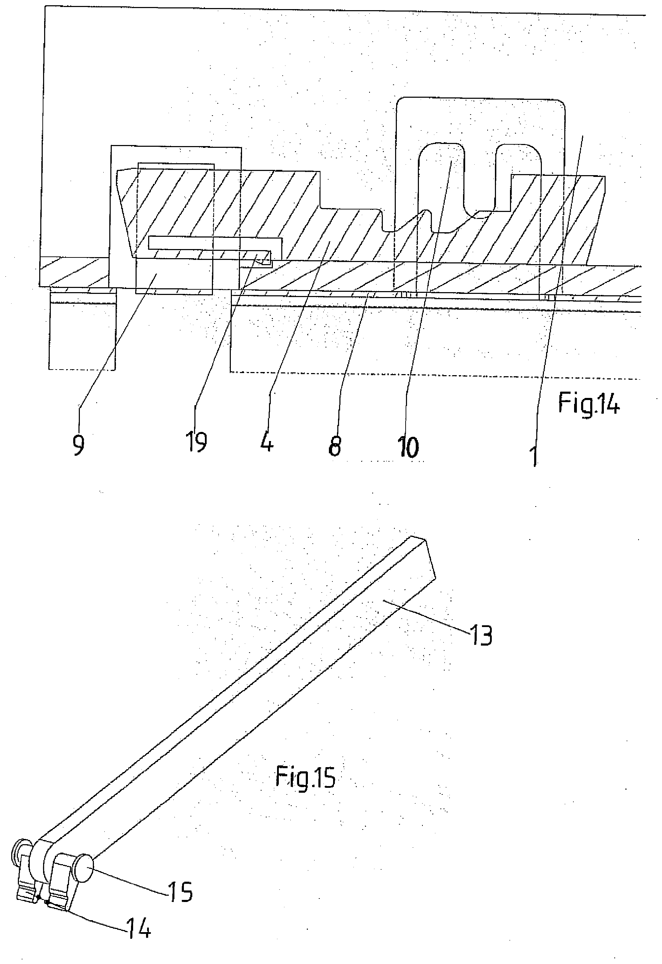

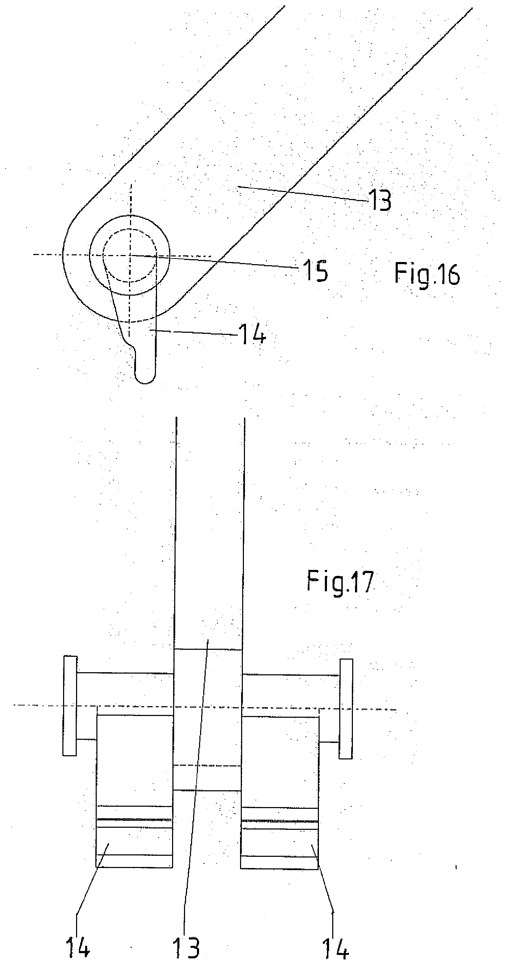

Am Träger 8 ist ebenfalls randnah mit Abstand zwischen jeweils 2 Haken 9 eine Verstelllasche 10 ausgebildet, die seitlichen Abstand von den Haken 9 aufweist. Sie ragt gleichgerichtet zu den Haken 9 von der Stützfläche des Trägers 8 ab. Das Stützteil 1 weist wiederum in seinen Halteflächen jeweils eine Ausnehmung 3 auf, die einen Durchgriff für die Verstelllasche 10 bildet. Beim Aufstecken des Stützteiles 1 kann die Verstelllasche 10 von unten in diese Ausnehmung 3 eingreifen und seitlich in dieser Ausnehmung 3 positioniert werden, wie beispielsweise in Figur 4 gezeigt ist. Dabei ist die Verstelllasche 10 von innen, also zwischen den Schenkeln des Stützteiles 1 her zugänglich. Die an die Haltefläche anschließende Seitenwandung des Stützteiles 1 weist dazu einen zur Verstelllasche 10 passenden und offenen Wandungsdurchbruch oder eine Wandungsausnehmung auf. Des Weiteren ist ein Montagehebel 13 vorgesehen, wie er in Figur 15 bis 17 gezeigt ist und wie er in Figur 10 bis 14 in einer Montagehilfsposition veranschaulicht ist. Dieser Montagehebel 13 ist mit einem Endbereich in der Verstelllasche 10, die ein entsprechendes Gabellager aufweist, um eine Drehachse 15 drehbar gelagert. Er weist eine Verstellnase 14 auf, die in eine Verstellkontur 7 des Riegels 4 eingreift. Der Montagehebel 13 weist eine Längserstreckung auf, sodass er sich von dem Endbereich, der die Verstellnase 14 aufweist, als schlanker Hebel bis zu einem zweiten Endbereich als Handhabe erstreckt. Der Hebel ist bei seiner Montagebewegung an der Seitenwand des Stützteiles 1 geführt. Zur Montage wird der Hebel in der Position, wie sie in Figur 10 gezeigt ist, mit seiner Verstellnase 14 in die entsprechende Verstellkontur 7 eingesetzt und aus der Stellung gemäß Figur 10 im Uhrzeigersinn um einen entsprechenden Winkelgrad gedreht, sodass sich die Position gemäß Figur 11 einstellt. Hierbei ist der Riegel 4 teilweise schon von dem abgewinkelten Hakenende der Haken 9 übergriffen. Anschließend wird der Hebel 13 neu positioniert und in die Position überführt, die in Figur 12 gezeigt ist. Aus dieser Position wird der Hebel wiederum im Uhrzeigersinn in die Position gemäß Figur 13 gedreht, sodass dann die abgewinkelten Enden der Haken 9 die entsprechende obere Kante des Riegels 4 vollständig übergreift. Die Hand des Monteurs ist bei der Betätigung des Hebels 13 auf das freie Ende (z.B. Figur 10 und 12) aufgelegt. Der Monteur bewegt den Hebel 13 abwärts in die Position gemäß Figur 11, Figur 13, wobei diese Bewegung durch das Körpergewicht des Monteurs unterstützt wird, was vor allem bei der Montage am Montageband vorteilhaft ist.

Das Stützteil 1 weist zusätzlich an seiner Haltefläche Führungs- oder Stützstege auf, von denen beispielsweise in Figur 3 und 4 jeweils eine an der rechten Seite ersichtlich ist. Der Riegel 4 ist zwischen diesen Stützstegen und der seitlichen Begrenzungswand des Stützteiles 1 verschieblich geführt und gehalten.

Zusätzlich kann an Riegel 4, wie in Figur 14 gezeigt ist, eine federnde Raste 19 vorgesehen sein, die an einer Ausnehmung in der Haltefläche des Stützteiles 1 in Montagesollposition eingerastet ist, wie Figur 14 zeigt.

Wie anschaulich in Figur 18 und 19 gezeigt, ist der jeweilige Durchlassbereich 5,6 des Riegels 4 durch eine Ausnehmung in einer Seitenfläche des Riegels 4 gebildet, die in der Montagesolllage dem Hakenschaft des Hakens 9 zugewandt ist. Dabei ist die Ausnehmung durch zwei Seitenwandteile und ein Basisteil einer Nut im Riegel 4 ausgebildet. In den Ausführungsbeispielen ist mindestens eine Seitenwand dieser Nut (des Durchlassbereiches 5 bzw. 6) eine Einführhilfe für den Haken 9 bildend geschrägt, wie in Figur 18 und 19 gezeigt ist.

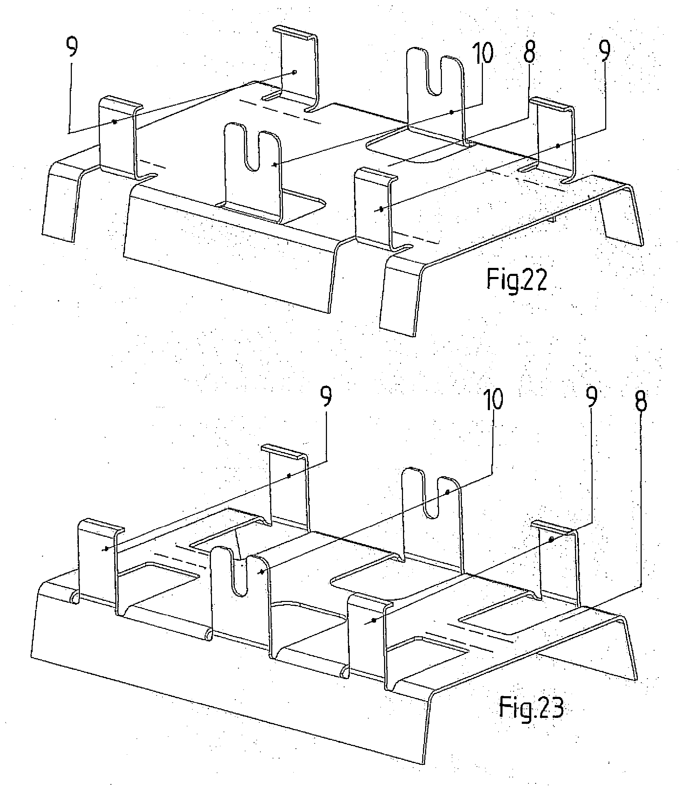

Der Träger 8 weist im Übrigen an zwei parallele Seitenlängsrandkanten anschießende, vom Stützteil 1 weggerichtet abragende Wandungsteile auf, die zur Verbindung mit der Karosseriestruktur genutzt werden können. Die Haken 9 schließen mit ihrem Fußteil an ein Wandungsteil, welches unterseitig abragt an, wie in Figur 23 gezeigt ist, wodurch eine relative steife Ausgestaltung erreicht wird. Alternativ können die Haken 9 mit ihrem Fußteil in die Stützfläche des Trägers 8 übergehen, wie in Figur 22 gezeigt ist, wobei der Übergangsbereich durch den Hakenfuß seitlich umgebende Trennschlitze in der Stützfläche des Trägers 8 gebildet sind. Hierdurch wird eine gewisse Federung der Haken 9 erreicht, um Toleranzen ausgleichen zu können.

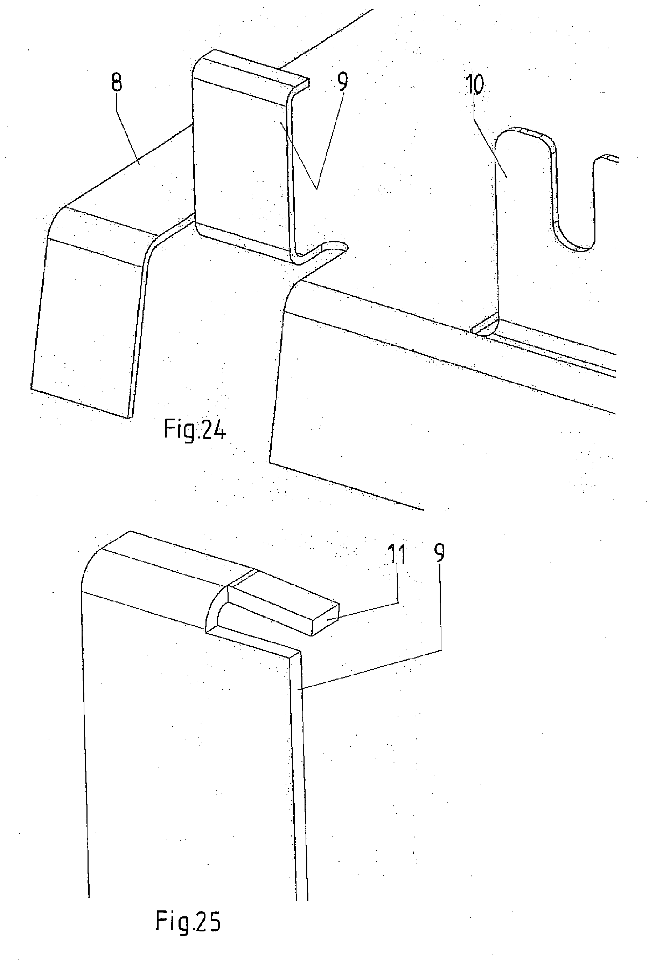

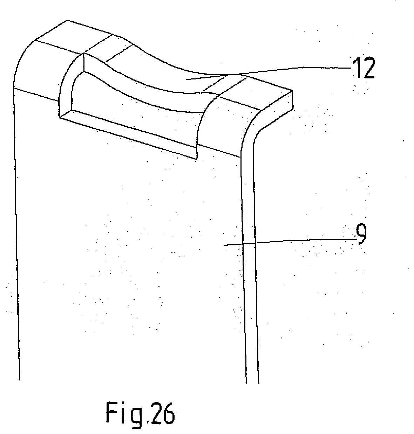

Eine weitere Besonderheit besteht in der Ausgestaltung, wie sie in Figur 25 bzw. 26 gezeigt ist. Hierbei weisen die Haken 9 Hakennasen auf, die über einen Teil ihrer Breite freigeschnitten sind, sodass federnde Hakennasenteile 11 gebildet sind. Bei der Ausführungsform nach Figur 25 ist der Freischnitt über einen Teil der Breite der Hakennase ausgeführt, sodass federnde Hakennasenteile 11 gebildet sind. Bei der Ausführungsform nach Figur 26 ist ein Freischnitt zwischen den seitlichen Enden der Hakennase des Hakens 9 ausgebildet, sodass ein federnder Bereich 12 zur Verfügung steht, um Toleranzen ausgleichen zu können. Bei der Ausgestaltung nach Figur 25 mündet der entsprechende Freischnitt zu einem seitlichen Ende der Hakennase des Hakens 9 offen aus. Bei beiden Ausführungsbeispielen ist der durch den Freischnitt gebildete Steg des Hakens 9 zum Hakenfuß hin vorragend von der Hakennase abgebogen oder weggerichtet, was für den Toleranzausgleich sinnvoll und förderlich ist.

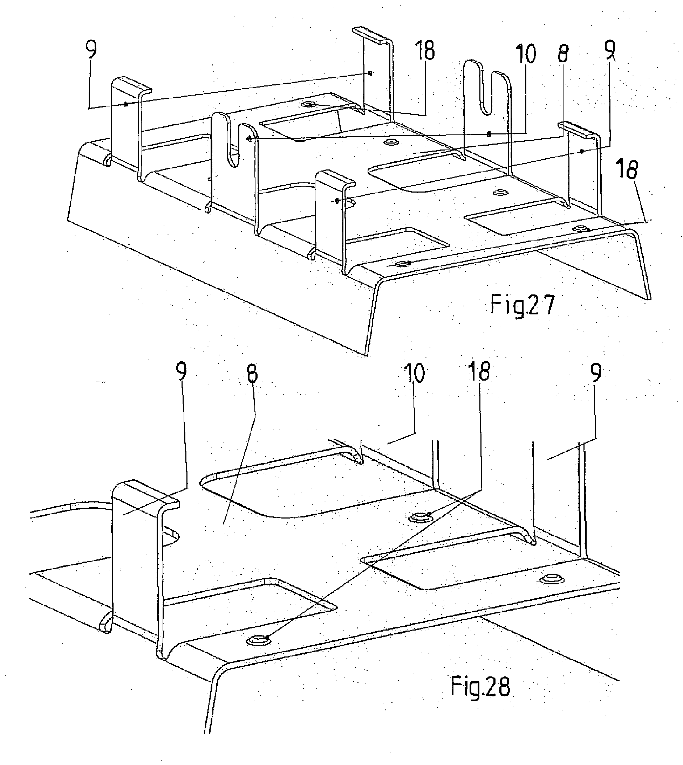

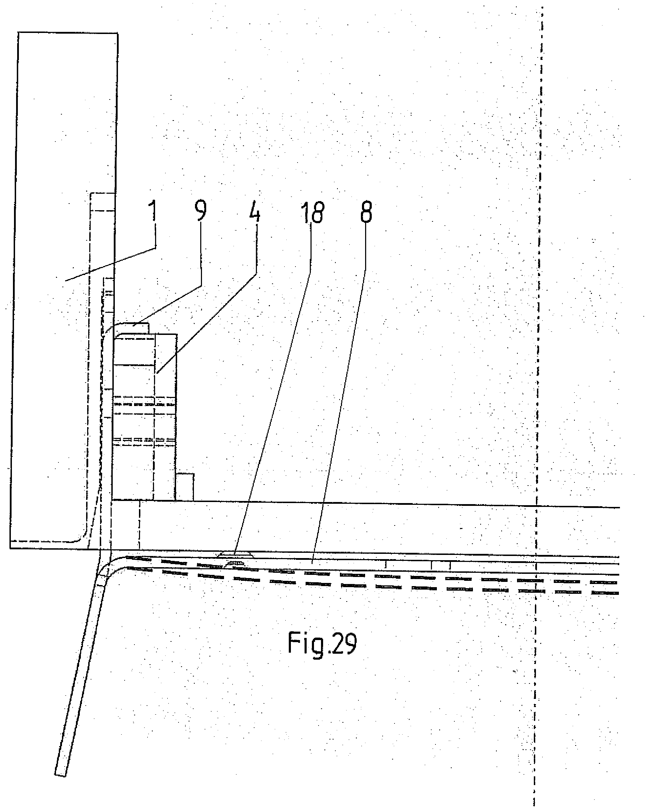

Wie in Figur 27 bis 29 verdeutlicht, weist die Stützfläche des Trägers 8 mehrere aus dessen Fläche zum Stützteil 1 hin nach oben vorragende federnde Materialbereiche oder Buckel 18 auf, die wiederum dem Toleranzausgleich dienen, wie in Figur 29 veranschaulicht ist.

In allen Ausführungsbeispielen ist der Träger 8 ein Blechformteil, bei dem die Haken 9, die Verstelllasche 10 sowie die Stützflächen oder Stützflächenteile und abgewinkelte Randteile einstückig an einem flachen Blechzuschnitt angeformt, freigeschnitten und/oder abgebogen sind. Die Haken 9 und die Verstelllaschen 10 können vorteilhaft aus dem Blechformteil, welches den Träger 8 bildet ausgeschnitten und aufgestellt sein, sodass kein oder kaum ein Stanzabfall anfällt. Zudem kann eine Versteifung des Trägers 8 durch eingeformte Sicken vorgesehen sein, die am Ende des Ausschnittes insbesondere für die Haken 9 quer zu diesem Ausschnitt verlaufend vorgesehen sein können, wie dieser in Figur 23 gezeigt ist, oder auch benachbart den Ausschnittkonturen der Haken 9 wie in Figur 22 gezeigt jeweils vor diesen und quer zu diesen, wie in Figur 22 und 23 durch gestichelte Linien verdeutlicht ist.

Das Stützteil 1 ist hingegen ein Formteil aus spritzgießfähigem Material, insbesondere Kunststoff oder Metall.

Der besondere Vorteil der erfindungsgemäßen Anordnung besteht darin, dass das Stützteil 1 in einfacher Art an dem Träger 8 befestigt werden kann, in dem es von oben auf den Träger 8 aufgesteckt wird und anschließend der Riegel 4 in die Montagesollposition verschoben wird, sodass dann die Teile miteinander verriegelt sind und zum Gebrauch zur Verfügung stehen.

## Patentansprüche

1. Anordnung zur Befestigung eines Ausstattungsteiles des Innenraumes eines Kraftfahrzeuges an Bestandteilen der Karosserie, bestehend aus einem karosserieseitig befestigbaren oder befestigten Träger (8) und einem mit dem Träger (8) lösbar verbundenen Stützteil (1) als Bestandteil des Ausstattungsteiles, **dadurch gekennzeichnet, dass** der Träger (8) eine Stützfläche oder Stützflächenteile aufweist, an der oder an denen das Stützteil (1) mit einer Haltefläche oder Halteflächenteilen anliegt,
dass von der Stützfläche oder von Stützflächenteilen des Trägers (8) mindestens ein Haken (9) abragt, der eine passende Ausnehmung (2) der Haltefläche oder der Halteflächenteile des Stützteiles (1) durchgreift und auf der dem Träger (8) abgewandten Seite über die Haltefläche oder die Halteflächenteile vorragt,
dass am Stützteil (1) mindestens ein Riegel (4) parallel zu dessen Haltefläche oder Halteflächenteil verschieblich gehalten ist, der in einer Vormontagelage einen Durchlassbereich (5,6) für den Haken (9) bildet und der in der Montagesollstellung vom Haken (9) übergriffen ist, dass am Träger (8) randnah jeweils parallel zu einem Haken (9) oder mehreren Haken (9) eine Verstelllasche (10) ausgebildet ist, die Abstand von dem Haken (9) aufweist oder vor oder zwischen zwei Haken (9) angeordnet ist und gleichgerichtet zu den Haken (9) von der Stützfläche des Trägers (8) abragt, dass das Stützteil (1) in seiner Haltefläche jeweils eine Ausnehmung (3) als Durchgriff für eine Verstelllasche (10) aufweist, und in einer an die Haltefläche anschließenden Seitenwandung des Stützteiles (1) einen zur Verstelllasche (10) offenen Wandungsdurchbruch aufweist, dass ein Montagehebel (13) vorgesehen ist, der in Montagelage mit einem Endbereich in einer Verstelllasche (10) drehbar um eine Drehachse (15) drehbar gelagert ist und mit mindestens einer Verstellnase (14) in eine Verstellkontur (7) eines Riegels (4) eingreift, wobei der Montagehebel (13) sich von dem Endbereich, der die Verstellnase (14) aufweist, als schlanker Hebel bis zu einem zweiten Endbereich als Handhabe erstreckt und neben der Seitenwandung des Stützteiles (1) gegebenenfalls an der Seitenwandung geführt angeordnet ist.

2. Anordnung nach Anspruch 1, **dadurch gekennzeichnet, dass** an zwei zueinander parallelen Randbereichen der Stützfläche oder der Stützflächenbereiche des Trägers (8) jeweils mit Abstand voneinander zwei Haken (9) abragen, das Stützteil (1) entsprechend an zwei zueinander parallelen Randbereichen der Haltefläche oder der Halteflächenteile des Stützteiles (1) Ausnehmungen (2) aufweist, die von den Haken (9) durchgriffen sind, und dass zwei Riegel (4) angeordnet sind, die jeweils entlang der Randbereiche der Haltefläche oder Halteflächenteile des Stützteiles (1) längs des Randbereiches verschieblich gehalten sind.

3. Anordnung nach Anspruch 1 oder 2, **dadurch gekennzeichnet, dass** der Träger (8) eine rechteckige Stützfläche aufweist, deren zueinander parallele Längsrandkanten die Haken (9) aufweisen, wobei die Haken (9) vom Träger (8) zum Stützteil (1) hin vorragen und an den freien Enden der an gegenüberliegenden Längsrandkanten ausgebildeten Haken (9) zueinander hin gerichtete Hakennasen ausgebildet sind.

4. Anordnung nach einem der Ansprüche 1 bis 3, **dadurch gekennzeichnet, dass** das Stützteil (1) etwa u-förmig ausgebildet ist und mit seiner Basis als Haltefläche an der Stützfläche des Trägers (8) anliegt, wobei die Schenkel des Stützteiles (1) von der Basis entgegen der Stützfläche des Trägers (8) abragen und wobei in der Basis des Stützteiles (1) die Ausnehmungen (2) in unmittelbarer Nähe der Schenkel ausgebildet sind und an die Ausnehmungen (2) anschließende Freiräume (2') für die Haken (9) in den Schenkeln des Stützteiles (1) ausgebildet sind, in welche die Haken (9) des Trägers (8) eingreifen.

5. Anordnung nach einem der Ansprüche 1 bis 4, **dadurch gekennzeichnet, dass** das Stützteil (1) an seiner Haltefläche Führungs- und/oder Stützstege aufweist sowie eine seitliche Begrenzungswand, wobei der Riegel (4) zwischen den Stegen und der Begrenzungswand längsverschieblich geführt und gehalten ist.

6. Anordnung nach einem der Ansprüche 1 bis 5, **dadurch gekennzeichnet, dass** am Riegel (4) eine federnde Raste (19) ausgebildet ist, die in Solllage, an einer Ausnehmung in der Haltefläche des Stützteiles (1) eingerastet ist.

7. Anordnung nach einem der Ansprüche 1 bis 6, **dadurch gekennzeichnet, dass** der Durchlassbereich (5,6) des Riegels (4) durch eine Ausnehmung in einer Seitenfläche des Riegels (4) gebildet ist, die dem Hakenschaft des Hakens (9) zugewandt ist, wobei die Ausnehmung durch zwei Seitenwandteile und ein Basisteil einer Nut im Riegel (4) gebildet ist.

8. Anordnung nach Anspruch 7, **dadurch gekennzeichnet, dass** mindestens eine Seitenwand der Nut des Riegels (4) eine Einführhilfe für den Haken (9) bildend geschrägt ist.

9. Anordnung nach Anspruch 1, **dadurch gekennzeichnet, dass** die Verstellkontur (7) des Riegels (4) mehrere Eingriffsbereiche für die Verstellnase (14) des Montagehebels (13) aufweist, die in Längsrichtung bzw. Schubrichtung des Riegels (4) einander benachbart sind.

10. Anordnung nach einem der Ansprüche 1 bis 9, **dadurch gekennzeichnet, dass** der Träger (8) an zwei parallele Seitenlängsrandkanten anschließende, vom Stützteil (1) weg gerichtete Wandungsteile aufweist.

11. Anordnung nach Anspruch 10, **dadurch gekennzeichnet, dass** die Haken (9) mit ihrem Fußteil an ein Wandungsteil anschließen.

12. Anordnung nach Anspruch 10, **dadurch gekennzeichnet, dass** die Haken (9) mit ihrem Fußteil in die Stützfläche des Trägers (8) übergehen, wobei der Übergangsbereich durch den Hakenfuß seitlich umgebende Trennschlitze in der Stützfläche des Trägers (8) gebildet sind.

13. Anordnung nach einem der Ansprüche 1 bis 12, **dadurch gekennzeichnet, dass** die Haken (9) Hakennasen aufweisen, die über einen Teil ihrer Breite freigeschnitten sind, sodass federnde Hakennasenteile (11) gebildet sind.

14. Anordnung nach Anspruch 13, **dadurch gekennzeichnet, dass** der Freischnitt zwischen den seitlichen Enden der Hakennase des Hakens (9) ausgebildet ist.

15. Anordnung nach Anspruch 13, **dadurch gekennzeichnet, dass** der Freischnitt zu einem seitlichen Ende der Hakennase des Hakens (8) offen ausmündet.

16. Anordnung nach einem der Ansprüche 13 bis 15, **dadurch gekennzeichnet, dass** der durch den Freischnitt gebildete Steg des Hakens (9) zum Hakenfuß hin vorragend von der Hakennase abgebogen oder weggerichtet ist.

17. Anordnung nach einem der Ansprüche 1 bis 16, **dadurch gekennzeichnet, dass** die Stützfläche des Trägers (8) mehrere aus der Fläche zum Stützteil (1) hin vorragende federnde Materialbereiche oder Buckel (18) aufweist.

18. Anordnung nach einem der Ansprüche 1 bis 17, **dadurch gekennzeichnet, dass** der Träger (8) ein Blechformteil ist, bei dem die Haken (9), die Verstelllasche (10) sowie die Stützflächen oder Stützflächenteile und abgewinkelte Randteile einstückig an einen flachen Blechzuschnitt angeformt, freigeschnitten und/oder abgebogen sind.

19. Anordnung nach einem der Ansprüche 1 bis 18, **dadurch gekennzeichnet, dass** das Stützteil (1) ein Formteil aus spritzgießfähigem Material, insbesondere Kunststoff und/oder Metall ist.

## Claims

1. An arrangement for the attachment of an equipment component of the interior of a motor vehicle at components of the vehicle body, consisting of a carrier (8) attachable or attached at the vehicle body and a support part (1) releasably connected to the carrier (8) as a portion of the equipment component, **characterized by that** the carrier (8) includes a support face or support face parts, against which the support part (1) rests with a holding face or holding face parts, that from the support face or the support face parts of the carrier (8) protrudes at least one hook (9) that penetrates a matching recess (2) of the holding face or of the holding face parts of the support part (1) and protrudes on the side facing away from the carrier (8) beyond the holding face or the holding face parts, that at the support part {1) at least one bolt (4) is displaceably held in parallel to its holding face or holding face part, said bolt forming, in a pre-mounting position, a passage (5, 6) for the hook (9) and being overlapped, in the intended mounting position, by the hook (9), that at the carrier (8) close to the edge thereof respectively in parallel to a hook (9) or several hooks (9), an adjustment tab (10) is provided that is spaced to the hook (9) or is arranged before or between two hooks (9) and protrudes in line with the hooks (9) from the support face of the carrier (8), that the support part (1) includes, in its holding face, one recess (3) each as a passage for an adjustment tab (10), and includes, in a side wall of the support part (1) adjoining the holding face, a wall opening being open towards the adjustment tab (10), that a mounting lever (13) is provided that, in the mounting position, is mounted, with an end portion in an adjustment tab (10), rotatably about an axis of rotation (15) and engages, with at least one adjustment nose (14), in an adjustment contour (7) of a bolt (4), the mounting lever (13) extending from the end portion including the adjustment nose (14) as a slim lever up to a second end portion as a handle and being arranged beside the side wall of the support part (1), if applicable, guided at the side wall.

2. The arrangement of claim 1, **characterized by that** at two parallel edge areas of the support face or the support face areas of the carrier (8) respectively, two hooks (9) spaced to each other protrude, that correspondingly the support part (1) includes, at two parallel edge areas of the holding face or of the holding face parts of the support part (1), recesses (2) that are penetrated by the hooks (9), and that two bolts (4) are disposed that are held, respectively, displaceably along the edge areas of the holding face or of the holding face parts of the support part (1) along the edge area.

3. The arrangement of claim 1 or 2, **characterized by that** the carrier (8) includes a rectangular support face, the parallel longitudinal edges of which include the hooks (9), the hooks (9) protruding from the carrier (8) towards the support part (1), and hook noses directed towards each other being provided at the free ends of the hooks (9) formed at opposite longitudinal edges.

4. The arrangement of one of claims 1 to 3, **characterized by that** the support part (1) is approximately u-shaped and rests with its base as a holding face against the support face of the carrier (8), the legs of the support part (1) protruding from the base opposite to the support face of the carrier (8), and in the base of the support part (1), the recesses (2) being formed in immediate proximity of the legs and free spaces (2') adjoining the recesses (2) for the hooks (9) being formed in the legs of the support part (1), in which the hooks (9) of the carrier (8) engage.

5. The arrangement of one of claims 1 to 4, **characterized by that** the support part (1) includes, at its holding face, guide and/or support webs as well as a lateral stop wall, the bolt (4) being longitudinally displaceably guided and held between the webs and the stop wall.

6. The arrangement of one of claims 1 to 5, **characterized by that** at the bolt (4), a resilient latch (19) is formed that, in the intended mounting position, is latched in a recess in the holding face of the support part (1).

7. The arrangement of one of claims 1 to 6, **characterized by that** the passage (5, 6) of the bolt (4) is formed by a recess in a side face of the bolt (4) that faces the hook shaft of the hook (9), the recess being formed by two side wall parts and a base part of a groove in the bolt (4).

8. The arrangement of claim 7, **characterized by that** at least one side wall of the groove of the bolt (4) is slanting forming an introduction aid for the hook (9).

9. The arrangement of claim 1, **characterized by that** the adjustment contour (7) of the bolt (4) includes multiple engagement sections for the adjustment nose (14) of the mounting lever (13) that are adjacent to each other in the longitudinal direction or motion direction of the bolt (4).

10. The arrangement of one of claims 1 to 9, **characterized by that** the carrier (8) includes wall parts adjoining two parallel lateral longitudinal edges facing away from the support part (1).

11. The arrangement of claim 10, **characterized by that** the hooks (9), with their foot portion, adjoin a wall part.

12. The arrangement of claim 10, **characterized by that** the hooks (9), with their foot portion, transition into the support face of the carrier (8), the transition area being formed by separation slots in the support face of the carrier (8) laterally enclosing the hook foot.

13. The arrangement of one of claims 1 to 12, **characterized by that** the hooks (9) include hook noses that are cut free over part of their width, so that resilient hook nose parts (11) are formed.

14. The arrangement of claim 13, **characterized by that** the cut-free portion is formed between the lateral ends of the hook nose of the hook (9).

15. The arrangement of claim 13, **characterized by that** the cut-free portion openly terminates at a lateral end of the hook nose of the hook (8).

16. The arrangement of one of claims 13 to 15, **characterized by that** the web of the hook (9) formed by the cut-free portion is bent or facing away from the hook nose, protruding towards the hook foot.

17. The arrangement of one of claims 1 to 16, **characterized by that** the support face of the carrier (8) includes multiple resilient material sections or bosses (18) protruding from the face towards the support part (1).

18. The arrangement of one of claims 1 to 17, **characterized by that** the carrier (8) is a shaped sheet-metal part, in which the hook (9), the adjustment tab (10) as well as the support faces or support face parts and angled edge parts are formed as one piece, cut free and/or bent off at a flat sheet-metal blank.

19. The arrangement of one of claims 1 to 18, **characterized by that** the support part (1) is a shaped part of an injection-moldable material, in particular plastic and/or metal.

## Revendications

1. Agencement pour la fixation d'un équipement d'intérieur d'un véhicule automobile à des composants de la caisse, consistant en une poutrelle (8) fixable ou fixée à la caisse et une pièce de support (1) reliée de façon amovible à la poutrelle (8) comme partie de l'équipement, **caractérisé en ce que** la poutrelle (8) comporte une surface de support ou des parties d'une surface de support, sur laquelle ou lesquelles la pièce de support (1) est en appui avec une surface de retenue ou des parties d'une surface de retenue, que de la surface de support ou des parties de la surface de support de la poutrelle (8) fait saillie au moins un crochet (9) qui traverse un évidement (2) complémentaire de la surface de retenue ou des parties de la surface de retenue de la pièce de support (1) et fait saillie sur le côté opposé à la poutrelle (8) au-delà de la surface de retenue ou des parties de la surface de retenue, qu'à la pièce de support (1) au moins un verrou (4) est retenu de façon déplaçable en parallèle à sa surface de retenue ou sa partie de la surface de retenue, ledit verrou formant, dans une position de pré-montage, un passage (5, 6) pour le crochet (9) et se superposant, dans la position de montage de consigne, au crochet (9), qu'à la poutrelle (8) près de son bord, une languette d'ajustage (10) est prévue respectivement en parallèle à un crochet (9) ou à plusieurs crochets (9), cette languette d'ajustage (10) étant disposée à distance du crochet (9) ou étant arrangée devant ou entre deux crochets (9) et faisant saillie colinéairement avec les crochets (9) de la surface de support de la poutrelle (8), que la pièce de support (1) comporte, dans sa surface de retenue, un évidement (3) chacun comme passage pour la languette d'ajustage (10), et comporte, dans une paroi latérale de la pièce de support (1) dans le prolongement de la surface de retenue, une ouverture dans la paroi étant ouverte vers la languette d'ajustage (10), qu'un levier de montage (13) est prévu qui, dans la position de montage, est monté, avec une partie d'extrémité dans une languette d'ajustage (10), en rotation autour d'un axe de rotation (15) et s'engage, avec au moins un bec d'ajustage (14), dans un contour d'ajustage (7) d'un verrou (4), le levier de montage (13) s'étendant à partir de la partie d'extrémité comportant le bec d'ajustage (14) comme levier mince jusqu'à une deuxième partie d'extrémité comme poignée et étant disposé à côté de la paroi latérale de la pièce de support (1), le cas échéant, guidé à la paroi latérale.

2. Agencement selon la revendication 1, **caractérisé en ce qu'**à deux zones de bord parallèles de la surface de support ou des zones de la surface de support de la poutrelle (8), deux crochets (9) respectivement à distance l'un de l'autre font saillie, qu'en conséquence la pièce de support (1) comporte, à deux zones de bord parallèles de la surface de retenue ou des parties de la surface de retenue de la pièce de support (1), des évidements (2) qui sont traversés par les crochets (9), et que deux verrous (4) sont disposés qui sont retenus, respectivement, de façon déplaçable le long des zones de bord de la surface de retenue ou des parties de la surface de retenue de la pièce de support (1) le long de la zone de bord.

3. Agencement selon la revendication 1 ou 2, **caractérisé en ce que** la poutrelle (8) comporte une surface de support rectangulaire, les arêtes longitudinales parallèles de laquelle comportent les crochets (9), les crochets (9) faisant saillie de la poutrelle (8) vers la pièce de support (1), et des becs de crochet dirigés l'un vers l'autre étant prévus aux extrémités libres des crochets (9) formés à des arêtes longitudinales opposées.

4. Agencement selon une des revendications 1 à 3, **caractérisé en ce que** la pièce de support (1) est environ en forme d'u et est en appui avec sa base comme surface de retenue sur la surface de support de la poutrelle (8), les jambes de la pièce de support (1) faisant saillie de la base en opposition à la surface de support de la poutrelle (8), et dans la base de la pièce de support (1), les évidements (2) étant formés à proximité immédiate des jambes, et des espaces libres (2') étant formés dans le prolongement des évidements (2) pour les crochets (9) dans les jambes de la pièce de support (1), dans lesquels les crochets (9) de la poutrelle (8) s'engagent.

5. Agencement selon une des revendications 1 à 4, **caractérisé en ce que** la pièce de support (1) comporte, à sa surface de retenue, des entretoises de guidage et/ou de support aussi bien qu'une paroi d'arrêt latérale, le verrou (4) étant guidé et retenu de façon longitudinalement déplaçable entre les entretoises et la paroi d'arrêt.

6. Agencement selon une des revendications 1 à 5, **caractérisé en ce qu'**un cliquet (19) élastique est formé au verrou (4) qui, dans la position de montage de consigne, est encliqueté dans un évidement dans la surface de retenue de la pièce de support (1).

7. Agencement selon une des revendications 1 à 6, **caractérisé en ce que** le passage (5,6) du verrou (4) est formé par un évidement dans une surface latérale du verrou (4) qui est en regard de la tige du crochet (9), l'évidement étant formé par deux parties de la paroi latérale et une partie de base d'une rainure dans le verrou (4).

8. Agencement selon la revendication 7, **caractérisé en ce qu'**au moins une paroi latérale de la rainure du verrou (4) est biseautée, ainsi formant une aide d'introduction pour le crochet (9).

9. Agencement selon la revendication 1, **caractérisé en ce que** le contour d'ajustage (7) du verrou (4) comporte des sections d'engagement multiples pour le bec d'ajustage (14) du levier de montage (13) qui sont voisines l'une à l'autre dans la direction longitudinale ou la direction d'avance du verrou (4).

10. Agencement selon une des revendications 1 à 9, **caractérisé en ce que** la poutrelle (8) comporte des parties de paroi dans le prolongement de deux arêtes longitudinales latérales parallèles opposées à la pièce de support (1).

11. Agencement selon la revendication 10, **caractérisé en ce que** les crochets (9), avec leur partie de pied, prolongent une partie de paroi.

12. Agencement selon la revendication 10, **caractérisé en ce que** les crochets (9), avec leur partie de pied, passent à la surface de support de la poutrelle (8), la zone de passage étant formée par des fentes de séparation dans la surface de support de la poutrelle (8) latéralement environnant le pied du crochet.

13. Agencement selon une des revendications 1 à 12, **caractérisé en ce que** les crochets (9) comportent des becs de crochet qui sont découpés sur une partie de leur largeur, de façon que des parties de bec du crochet (11) élastiques soient formées.

14. Agencement selon la revendication 13, **caractérisé en ce que** la partie de découpe est formée entre les extrémités latérales du bec du crochet (9).

15. Agencement selon la revendication 13, **caractérisé en ce que** la partie de découpe se termine de façon ouverte à une extrémité latérale du bec du crochet (8).

16. Agencement selon une des revendications 13 à 15, **caractérisé en ce que** l'entretoise du crochet (9) formée par la partie de découpe est pliée ou opposée au bec du crochet, faisant saillie vers le pied du crochet.

17. Agencement selon une des revendications 1 à 16, **caractérisé en ce que** la surface de support de la poutrelle (8) comporte des sections en un matériau élastique ou bosses (18) multiples faisant saillie de la face vers la pièce de support (1).

18. Agencement selon une des revendications 1 à 17, **caractérisé en ce que** la poutrelle (8) est une pièce usinée en tôle, dans laquelle le crochet (9), la languette d'ajustage (10) aussi bien que les surfaces de support ou les parties des surfaces de support et des pièces de bord coudées sont formées en une pièce, découpées et/ou pliées à un flan en tôle plan.

19. Agencement selon une des revendications 1 à 18, **caractérisé en ce que** la pièce de support (1) est une pièce de formage en un matériau capable d'être moulé par injection, en particulier un matériau plastique et/ou métallique.
